(19) Europäisches Patentamt

European Patent Office

Office européen des brevets

(11) **EP 1 312 175 B1**

(12) **EUROPÄISCHE PATENTSCHRIFT**

(45) Veröffentlichungstag und Bekanntmachung des Hinweises auf die Patenterteilung:
**23.02.2005 Patentblatt 2005/08**

(21) Anmeldenummer: **01964895.5**

(22) Anmeldetag: **10.08.2001**

(51) Int Cl.7: **H04B 10/08**, H04B 10/18

(86) Internationale Anmeldenummer:
**PCT/DE2001/003073**

(87) Internationale Veröffentlichungsnummer:
**WO 2002/017514 (28.02.2002 Gazette 2002/09)**

(54) **VERFAHREN ZUR BESTIMMUNG UND KOMPENSATION DER VERKIPPUNG DES SPEKTRUMS IN EINER LICHTLEITFASER EINER DATENÜBERTRAGUNGSSTRECKE**

METHOD FOR DETERMINING AND COMPENSATING FOR THE TILTING OF THE SPECTRUM IN AN OPTICAL FIBER OF A DATA TRANSMISSION PATH

PROCEDE POUR LA DETERMINATION ET LA COMPENSATION DU BASCULEMENT DU SPECTRE DANS UNE FIBRE OPTIQUE D'UNE LIGNE DE TRANSMISSION DE DONNEES

(84) Benannte Vertragsstaaten:
**DE FR GB IT**

(30) Priorität: **21.08.2000 DE 10040791**

(43) Veröffentlichungstag der Anmeldung:
**21.05.2003 Patentblatt 2003/21**

(73) Patentinhaber: **SIEMENS AKTIENGESELLSCHAFT**
**80333 München (DE)**

(72) Erfinder:
• **ELBERS, Jörg-Peter**
**81375 München (DE)**
• **FÄRBERT, Andreas**
**81827 München (DE)**
• **GLINGENER, Christoph**
**83620 Feldkirchen-Westerham (DE)**
• **RAPP, Lutz**
**82041 Deisenhofen (DE)**
• **SCHEERER, Christian**
**CDN-Ottawa, Ontario K1S 2S4 (CA)**

(56) Entgegenhaltungen:
EP-A- 0 933 894       FR-A- 2 774 482
US-A- 5 818 629       US-A- 6 049 413

**Beschreibung**

Verfahren und Vorrichtung zur Bestimmung und Kompensation der Verkippung des Spektrums in einer Lichtleitfaser einer Datenübertragungsstrecke .

Die Erfindung betrifft ein Verfahren und eine Vorrichtung zur Bestimmung der Verkippung des Spektrums in einer Lichtleitfaser einer Datenübertragungsstrecke. Des weiteren betrifft die Erfindung ein Verfahren und eine Vorrichtung zur Kompensation der gemessenen Verkippung.

Es ist bekannt, daß in Lichtleitfasern durch stimulierte Raman-Streuung (SRS) Leistung von höheren zu niedrigen Frequenzen (von niedrigen zu höheren Wellenlängen) und damit zwischen Datenübertragungskanälen transferiert wird. Es wird also das ursprüngliche Frequenzspektrum des Lichtsignals "verkippt". Hierdurch verringert sich die Empfangsleistung der Kanäle mit kleinen Wellenlängen, wodurch deren Bitfehlerrate zunimmt. Es ist auch bekannt, die Verkippung des Spektrums von Lichtsignalen, die durch Lichtleitfasern, insbesondere von optischen Datenübertragungsstrecken, geleitet werden, zu messen und dieser Verkippung durch entsprechende Filterung oder Verstärkung entgegenzuwirken.

Zur Bestimmung dieser Verkippung wird im Stand der Technik eine aufwendige spektral auflösende Meßtechnik verwendet, die aufgrund der teuren und auch platzmäßig aufwendigen Meßtechnik keinen breiten Einsatz finden kann.

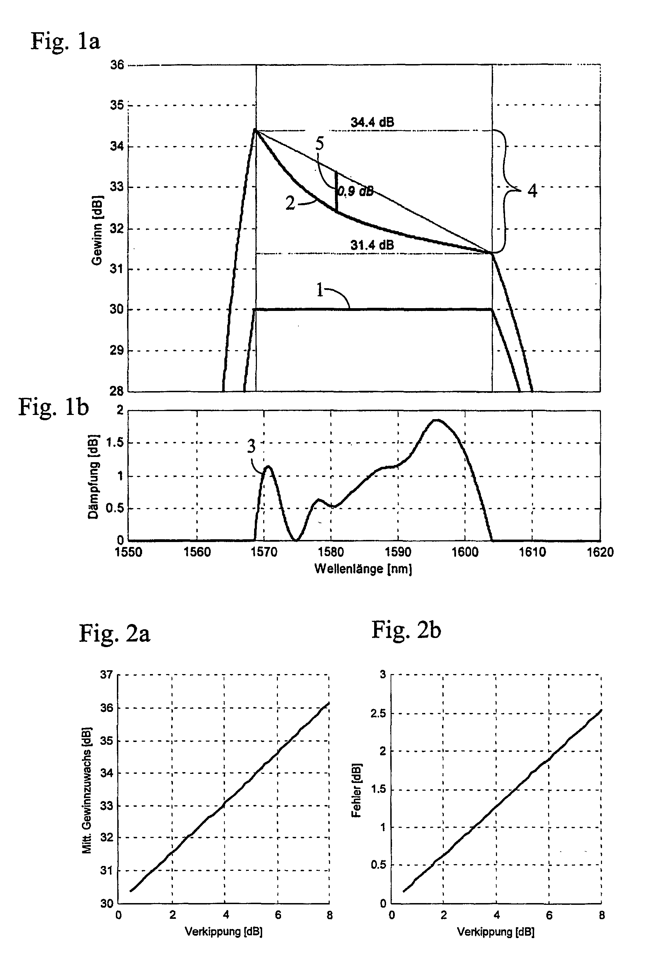

Ferner ist aus dem US-Patent US 5,818,629 ein Verfahren und eine Anordnung zur Ermittlung einer mittleren Wellenlänge ("momental wavelength") der übertragenen Lichtsignale und eine davon abhängige Regelung eines optischen Verstärkers zur Kompensation der Verkippung des Spektrums der übertragenen Lichtsignale bekannt, bei dem in einem "monitoring device" (siehe Figur 1) die "momental wavelength" der eingekoppelten Lichtsignale ermittelt wird. Anhand der mittleren Wellenlänge ("momental wavelength") wird die Verkippung des Spektrums der eingekoppelten Lichtsignale innerhalb des optischen Übertragungssystems ermittelt und die Verstärkung des optischen Verstärkers derart geregelt, daß die ermittelte verkippung des Spektrums nahezu kompensiert wird. Ein derartiges verfahren erfordert die technisch aufwendige Bestimmung der mittleren Wellenlänge und deren Auswertung.

Es ist daher Aufgabe der Erfindung, ein Verfahren zu entwickeln, welches auf einfache und schnelle Weise die Verkippung des Spektrums in einer Lichtleitfaser ohne spektral auflösende Meßtechnik bestimmen kann.

Diese Aufgabe wird durch die Merkmale des unabhängigen Patentanspruchs gelöst.

Die Erfinder haben folgendes erkannt:

Infolge der stimulierten Raman-Streuung (SRS) wird Leistung von Kanälen mit kleineren Wellenlängen zu Kanälen mit größeren Wellenlängen transferiert. Ein Teil der Kanäle erfährt also eine Zusatzdämpfung, während die anderen durch diesen nichtlinearen Effekt eine der Faserdämpfung entgegenwirkende Verstärkung erfahren. Diese Verstärkung beziehungsweise Zusatzdämpfung ist zeitabhängig. Bei stark unterschiedlichen Gruppenlaufzeiten zwischen den wechselwirkenden Kanälen, was häufig bei Verwendung von SSMF (Standard-Einmodenfaser, engl.: standard single mode fibre) der Fall ist, kann dieser Aspekt jedoch vernachlässig werden. Dennoch resultieren genau wie durch die Wellenlängenabhängigkeit des Gewinns in EDFA (= Erbium dotierten Faserverstärkern) unterschiedliche mittlere Leistungen für die einzelnen Kanäle. Diesen Effekt nennt man "Verkippung" des Spektrums. Prinzipiell ist es möglich, den Gewinn eines EDFA gezielt so einzustellen, daß diesem Effekt entgegengewirkt wird. Zur Kompensation einer jeglichen Verkippung in einer Datenübertragungsstrecke ist es allerdings notwendig, eine einfache Methode zur Bestimmung der Verkippung zu finden.

Grundsätzlich läßt sich eine lineare Verkippung, das heißt eine Verkippung 1. Ordnung bestimmen, durch die Information aus zwei Gesamtintensitäten im Spektrum jeweils nach dem Durchgang durch mindestens ein Filter mit bekannter frequenzabhängiger Transmissionscharakteristik oder mindestens einen Verstärker mit bekannter frequenzabhängiger Beeinflussungscharakteristik, nachfolgend allgemein als Beeinflussungselement bezeichnet. Verkippungen höherer Ordnung, also nichtlineare Verkippungen, lassen sich entsprechend durch eine entsprechend hohe Anzahl von Messungen von Gesamtintensitäten nach dem Durchgang durch jeweils andere bekannte frequenzabhängige Beeinflussungselemente annähern.

Zur Bestimmung der spektralen Verkippung eines Signals genügt es grundsätzlich, an einer Stelle Licht auszukoppeln und die Gesamtintensität nach dem Passieren zweier Beeinflussungselemente - z.B. Filter oder frequenzabhängige Verstärker - zu bestimmen. Eines dieser Filter kann auch auf einen Allpaß ohne Phasengang reduziert werden, so daß es genauso gut entfernt werden kann. Hier genügen dann ein Beeinflussungselement und zwei Meßstellen für die Gesamtintensität, um die spektrale Verkippung des Signals zu bestimmen. Ist allerdings die Gesamtintensität eines Signals vor dem Durchgang durch ein Beeinflussungselement aus anderen Informationen bereits bekannt, reicht auch ein einziges Beeinflussungselement und eine einzige Meßstelle der Gesamtintensität nach diesem Beeinflussungselement.

Signalverkippungen in einer Signalstrecke und durch den EDFA hervorgerufene Verkippung sind grundsätzlich gleichartig, wenn man ein flaches Eingangsspektrum voraussetzt. In einem Übertragungssystem wird aber senderseitig das Spektrum bewußt vorverzerrt, so daß zur Bestimmung der Verkippung durch den EDFA die Signalverkippung vor und nach dem EDFA bestimmt werden muß, da sonst die Information über das Eingangssignal nicht vorliegt.

Entsprechend diesen oben geschilderten Erfindungsgedanken schlagen die Erfinder vor, das bekannte Verfahren zur Bestimmung der Verkippung des Spektrums von Lichtsignalen in einer Lichtleitfaser einer optischen Datenübertragungsstrecke, dadurch zu verbessern, daß die optische Datenübertragungsstrecke mindestens ein Mittel zur Veränderung der Verkippung des Spektrums aufweist und die Lichtsignale durch mindestens einen optischen Verstärker verstärkt werden sowie ein Teil der verstärkten Lichtsignale ausgekoppelt wird. Die ausgekoppelten Lichtsignale werden teilweise durch ein Beeinflussungselement mit bekannter frequenzabhängiger Intensitätsbeeinflussung geleitet. Ferner wird die Gesamtintensität der ausgekoppelten Lichtsignale vor und nach dem Beeinflußungselement und die Gesamtintensität der Lichtsignale vor der Verstärkung gemessen. Hierbei wird als Beeinflussungselement (11) ein Verstärker oder eine verstärkend wirkende Wellenleiterstruktur oder Faser verwendet. Aufgrund des bekannten Einflusses des Beeinflussungselementes (11) und der gemessenen Gesamtintensitäten wird ein Regelkriterium zur Einstellung der Verkippung bestimmt, über das das Mittel zur Veränderung der Verkippung geregelt wird.

Entsprechend dem Erfindungsgedanken kann das oben dargestellte Meßverfahren auch für ein Verfahren zur Einstellung oder Kompensation der Verkippung des Spektrums von Lichtsignalen in einer Lichtleitfaser einer optischen Datenübertragungsstrecke verwendet werden. Diese Verkippung kann verändert beziehungsweise kompensiert werden, indem ein oder mehrere einstellbare Filter oder Dämpfungsglieder und/oder die Frequenzabhängigkeit der Verstärkung eines oder mehrerer optischer Verstärker, z.B. EDFA oder sonstige mit Seltenen Erden dotierte Wellenleiterstrukturen, derart eingestellt werden, daß sie der auf der Übertragungsstrecke entstehenden Verkippung entgegenwirken.

Erfindungsgemäß ist als Mittel zur Veränderung des Spektrums ein frequenzabhängiger optischer Verstärker, vorzugsweise eine mit Seltenen Erden dotierte Wellenleiterstruktur, Faser oder ein EDFA vorgesehen wobei die Frequenzabhängigkeit der Verstärkung der Wellenleiterstruktur oder Faser durch Veränderung der Pumpleistung derart eingestellt werden kann, daß sie der ursprünglichen Verkippung entgegenwirkt.

Weitere Merkmale der Erfindung ergeben sich aus den Unteransprüchen und der nachfolgenden Beschreibung der Ausführungsbeispiele unter Bezugnahme auf die Zeichnungen.

Im folgenden wird die Erfindung anhand von in den Zeichnungen dargestellten Ausführungsbeispielen und Anwendungsfällen näher beschrieben:

Figur 1a:    Zweistufiger Verstärker mit Reduktion des SRS-Einflusses durch Verkippung des Gewinns;
Figur 1b:    Transmissionscharakteristik eines verwendeten Filters;
Figur 2a:    Zunahme des mittleren Gewinns in Abhängigkeit von der Verkippung;
Figur 2b:    Fehler in Abhängigkeit von der Verkippung;
Figur 3:    Datenübertragungsstrecke mit regelbarer Gewinnverkippung zur Kompensation der SRS;
Figur 4:    Beispiel linear verkippter Spektren und linearer Frequenzgang eines Filters;
Figur 5:    Gemessene Leistungen nach dem Filter aus Figur 4 in Relation zur Steigung der Verkippung des Spektrums.

Die Figur 1a zeigt, wie durch die Verkippung des Gewinns eines EDFA der SRS-Einfluß reduziert werden kann, wobei in der darunter liegenden Figur 1b die Transmissionscharakteristik des verwendeten Filters dargestellt ist.

Da optische Datenübertragungsstrecken sehr unterschiedlich aufgebaut sein können und sich die spektrale Leistungsverteilung im Betrieb ändern kann, macht nur eine variable, also einstellbare, "Gewinnverkippung" Sinn. Bei den folgenden Betrachtungen wird davon ausgegangen, daß die mittlere Besetzungsinversion eines EDFA im Ausgangszustand so gewählt ist, daß minimale Gewinnunterschiede - ohne Einsatz eines Filter - auftreten, die mit Hilfe eines Filter noch weitgehend vollständig zum Verschwinden gebracht werden.

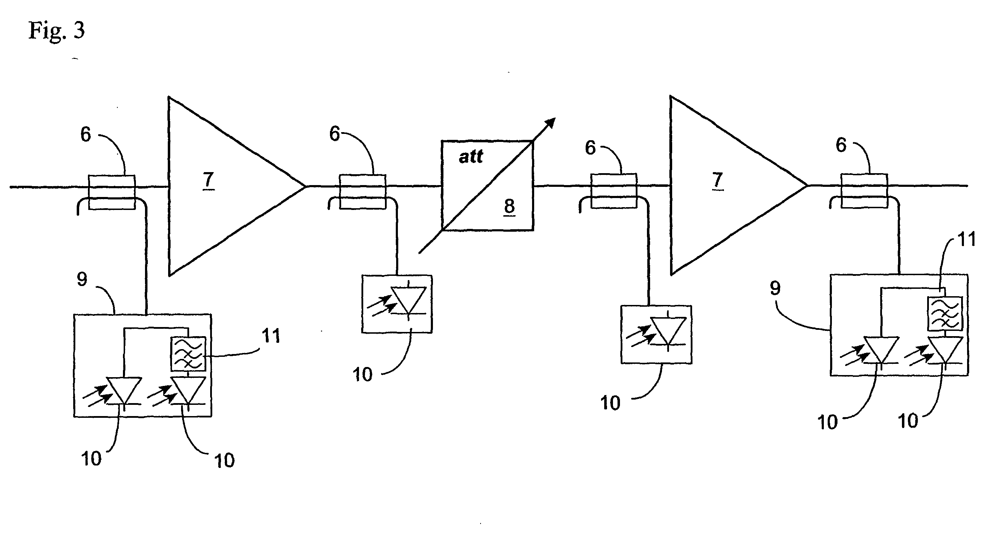

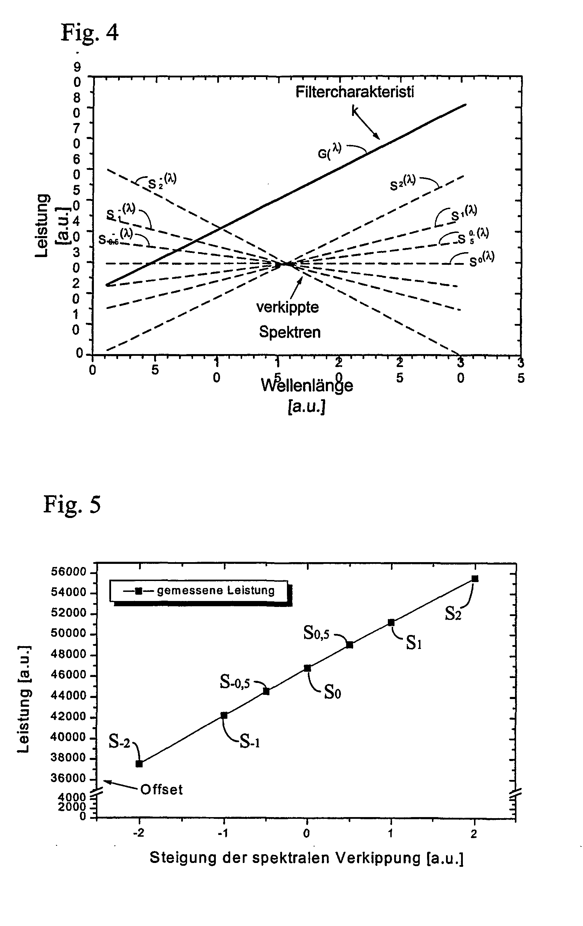

Um dem Effekt der SRS entgegenzuwirken, müssen Kanäle bei kleineren Wellenlängen eine größere Verstärkung erfahren als solche bei größeren Wellenlängen. Genau dieser Effekt tritt ein, wenn man die mittlere Besetzungsinversion des EDFA erhöht, was in den Figuren 1a und 1b dargestellt ist. Im Ausgangszustand ist der Gewinnverlauf vollständig flach. Um dies zu erreichen, wurde ein Filter mit in der Figur 1b gezeigten Transmissionscharakteristik 3 angenommen. Erhöht man nun bei einem EDFA-Aufbau, wie er in Figur 3 gezeigt ist, die Pumpleistung in einer oder beiden Verstärkerstufen 7, nimmt die mittlere Besetzungsinversion zu und es tritt die gewünschte Gewinnverkippung auf. Eine solche mögliche Gewinnverkippung in Abhängigkeit von der eingestellten Leistung ist auch in den Spektren der Figur 4 dargestellt.

Wie die Figuren 1a und 1b zeigen, bereitet diese Kompensationsmethode aber zwei Schwierigkeiten. Trägt man die Leistung der äquidistanten Kanäle logarithmisch über ihrer Wellenlänge auf, ergibt sich in sehr guter Näherung die Gerade 1, wenn nur die SRS wirkt. Der Verlauf des Gewinns 2 eines EDFA weist allerdings keinen linearen Verlauf als Funktion der Wellenlänge auf, so daß eine vollständige Kompensation nicht möglich ist. In dem gezeigten Beispiel für einen EDFA mit 30dB Gewinn im Ausgangszustand wurde die Pumpleistung so eingestellt, daß sich ein Gewinnunterschied 4 von maximal 3dB ergibt. Aufgrund der nicht idealen Kurvenform treten nach dem Einwirken der SRS zwischen den Kanälen Leistungsunterschiede 5 von 0,9 dB auf. Diese Abweichung von der idealen Kurvenform kann aber ausgeglichen werden, indem an wenigen Stellen entsprechende Filter in die Strecke eingefügt werden. Unter Umständen ist auch bereits die Einstellung verschiedener Sendeleistungen ausreichend, um gleiche Leistungspegel bzw. Signal-Geräuschleistungsverhältnisse an allen Empfängern zu erzielen. Ein weiterer Nachteil der Methode ist, daß der mittlere Gewinn ebenfalls zunimmt. Dies kann durch Erhöhung der Dämpfung des eingefügten Dämpfungsglieds kompensiert werden. Deutlich geringer fällt der Fehler aus, wenn man die Kanäle um ca. 10nm zu höheren Wellenlängen verlagert. In dem Beispiel wurde von einem Wellenlängenbereich von 1570nm bis 1605nm, dem sogenannten L-Band, ausgegangen. Das Verfahren ist aber auch bei anderen Wellenlängenbereichen anwendbar.

Die Zunahme des mittleren Gewinns ist in der Figur 2a und der auftretende "Fehler" in der Figur 2b als Funktion der Verkippung dargestellt. Es zeigt sich, daß die durch die SRS auftretenden Leistungsunterschiede zu ca. 2/3 ausgeglichen werden können. Im Ausgangszustand beträgt der Gewinn in Dezibel

$$G_{opt} = \frac{10}{\ln 10} L \cdot \left\{ \left[ \sigma^e(\lambda) + \sigma^a(\lambda) \right] \cdot \overline{N}_{opt} - \sigma^a(\lambda) \right\},$$

wobei L für die Gesamtlänge der dotierten Faser steht, $\sigma^e(\lambda)$ und $\sigma^a(\lambda)$ die von der Wellenlänge $\lambda$ abhängigen Koef- fizienten für Emission bzw. Absorption bezeichnen und $\overline{N}_{opt}$ die mittlere Besetzungsinversion im Ausgangszustand repräsentiert.

Im folgenden wird davon ausgegangen, daß im Ausgangszustand die Gewinnunterschiede mit Hilfe eines Filters vollständig kompensiert werden. Erhöht man nun die mittlere Besetzungsinversion um den Wert $\Delta\overline{N}$, so ergibt sich der Gewinn zu

$$G_{komp} = \frac{10}{\ln 10} L \cdot \left\{ \left[ \sigma^e(\lambda) + \sigma^a(\lambda) \right] \cdot \overline{N}_{opt} + \left[ \sigma^e(\lambda) + \sigma^a(\lambda) \right] \cdot \Delta\overline{N} - \sigma^a(\lambda) \right\}.$$

Im Vergleich zum Ausgangszustand ist also eine Gewinnzunahme um

$$\Delta G_{komp} = \frac{10}{\ln 10} L \cdot \left[ \sigma^e(\lambda) + \sigma^a(\lambda) \right] \cdot \Delta\overline{N}$$

zu verzeichnen. Die durch eine Erhöhung der mittleren Besetzungsinversion bewirkte Gewinnverkippung kann demnach durch eine Funktion $f(\lambda)$ beschrieben werden, die durch die Wirkungsquerschnitte festgelegt ist und noch mit einem Faktor zu multiplizieren ist. Die letzte oben stehende Gleichung macht deutlich, daß die Kompensation der SRS nicht verbessert werden kann, wenn von einem anderen Ausgangszustand des EDFA ausgegangen wird.

Um diese Methode in einem kommerziellen Übertragungssystem einsetzen zu können, muß eine geeignete Regelung zur Verfügung stehen, die sich leicht realisieren läßt.

Wie bereits dargelegt, besteht zwischen der Zunahme des internen Gewinns und der Verkippung ein eindeutiger Zusammenhang. Der interne Gewinn kann aus dem zwischen Eingang und Ausgang gemessenen Gewinn bestimmt werden, indem man noch die Dämpfung eines eingefügten Dämpfungsgliedes aufaddiert. Damit ist indirekt eine Regelgröße für die Verkippung gewonnen.

Dennoch ergibt sich eine gravierende Schwierigkeit. Da in der Regel keine Meßeinrichtung zur spektral aufgelösten Messung zur Verfügung steht, ist nur die Gesamtleistung am Eingang und Ausgang des Verstärkers bekannt, nicht aber wie sich diese auf die einzelnen Kanäle verteilt. Ein mittlerer Gewinn als eindeutige Bezugsgröße läßt sich so nicht ermitteln. Eine einfache Lösung für dieses Problem bringt der in Figur 3 gezeigte erweiterte EDFA-Aufbau. Hier wird am Eingang und am Ausgang des Verstärkers nicht nur die Gesamtleistung, sondern auch die Leistung bei einer bestimmten Wellenlänge gemessen. Damit ist der Gewinn für diesen Wellenlängenkanal und damit auch die Verkippung eindeutig bestimmbar.

Um den Einfluß nichtlinearer Fasereffekte zu reduzieren, können je nach verwendetem Fasertyp unterschiedliche Methoden zur Belegung des verfügbaren Wellenlängenbereichs angewendet werden. Die oben beschriebene Ausbildung der Erfindung führt zu Einschränkungen, da der zur Messung des Gewinns benützte Wellenlängenkanal immer in Betrieb sein muß.

Eine mögliche Lösung, die diese Einschränkung umgeht, kann wie in der Figur 3 dargestellt, ausgeführt werden.

Diese Figur 3 zeigt einen zweistufigen Verstärker aus einer Datenübertragungsstrecke mit regelbarer Gewinnverkippung zur Kompensation der durch stimulierte Raman-Streuung (SRS) verursachten Verkippung mit zwei regelbaren Verstärkerstufen (EDFA) 7. Die zugehörige elektronische Anordnung ist zur besseren Übersicht nicht dargestellt. Vor der ersten Verstärkerstufe 7 wird über den ersten Koppler 6 ein Teilsignal entnommen und über eine erste Photodiode 10 die ungefilterte Gesamtintensität und nach Filterung durch das bekannt frequenzabhängige Filter 11 ebenfalls die gefilterte Gesamtintensität gemessen. Mit diesen Daten wird, entsprechend der nachfolgenden Beschreibung, die Eingangsverkippung des Signals in die erste Verstärkerstufe 7 bestimmt. Hinter der ersten Verstärkerstufe 7 befindet sich ein weiterer Koppler 6 und eine Photodiode 10 zur Regelung des Gewinns der ersten Verstärkerstufe 7 in Zusammenwirken mit der am Eingang gemessenen Gesamtintensität. Nachfolgend passiert das Signal ein einstellbares frequenzunabhängiges Dämpfungsglied 8, einen weiteren Koppler 6, der wiederum ein Teilsignal am Eingang der zweiten Verstärkerstufe 7 auskoppelt und einer Photodiode 10 zur Messung ungefiltert zuführt. Hinter der zweiten und letzten Verstärkerstufe 7 wird abermals das resultierende Signal teilweise ausgekoppelt und einer Meßanordnung 9 mit einer Photodiode 10 ohne Vorfilter und einer Photodiode 10 mit vorgeschaltetem Filter 11 zur Messung zugeführt. Durch die letzte Meßanordnung wird die Verkippung des austretenden Signals aus der Verstärkeranordnung in der erfindungsgemäßen Weise bestimmt und entsprechend durch eine Veränderung der Inversion der EDFA, also durch Gewinnregelung der Verstärkerstufen 7, die Verkippung in den gewünschten Grenzen gehalten oder vollständig kompensiert. Das einstellbare Dämpfungsglied 8 dient dazu, den Gewinn des gesamten Verstärkers gegebenenfalls frequenzunabhängig zu reduzieren oder durch Zurücknahme einer voreingestellten Dämpfung anzuheben.

In dieser Ausführung ist es also nicht Aufgabe der eingezeichneten Filter 11, einen einzigen Kanal zu selektieren, sondern in ihrem Dämpfungsverhalten die Wellenlängenabhängigkeit der Gewinnverkippung, d.h. die Funktion $f(\lambda)$ bis auf eine Proportionalitätskonstante, nachzubilden. Ihre Transmissionscharakteristik lautet

$$T(\lambda)=\exp\{-\alpha \cdot f(\lambda)\},$$

wobei die Konstante $\alpha$ bekannt sei. Bezeichnet man die Leistungen der $N$ Kanäle mit $P_i$ und ihre Wellenlängen mit $\lambda_i$, lauten die am Eingang gemessenen Leistungen

$$P_{in} = \sum_{i=1}^{N} P_i$$

und nach der Filterung

$$P_{in}^{filt} = \sum_{i=1}^{N} P_i \cdot \exp\{-\alpha \cdot f(\lambda_i)\}.$$

Für die am Ausgang des Verstärkers gemessenen Leistungen gilt entsprechend

$$P_{out} = G_{opt} \cdot \sum_{i=1}^{N} P_i \exp\{\chi \cdot f(\lambda_i)\}$$

und nach der Filterung

$$P_{out}^{filt} = G_{opt} \cdot \sum_{i=1}^{N} P_i \exp\{(\chi - \alpha) \cdot f(\lambda_i)\}\,.$$

Die Konstante $\chi$ bestimmt den Grad der Gewinnverkippung und soll im folgenden bestimmt werden. Dazu entwickelt man zunächst die Exponentialfunktion in eine Reihe und bricht nach dem Glied zweiter Ordnung ab. Man erhält damit das Gleichungssystem

$$\frac{P_{out}}{G_{opt}} - P_{in} = \chi \cdot \sum_{i=1}^{N} f(\lambda_i) \cdot P_i + \frac{\chi^2}{2} \cdot \sum_{i=1}^{N} f^2(\lambda_i) \cdot P_i^2$$

$$\frac{P_{out}^{filt}}{G_{opt}} - P_{in} = (\chi - \alpha) \cdot \sum_{i=1}^{N} f(\lambda_i) \cdot P_i + \frac{(\chi - \alpha)^2}{2} \cdot \sum_{i=1}^{N} f^2(\lambda_i) \cdot P_i^2$$

$$P_{in}^{filt} - P_{in} = -\alpha \cdot \sum_{i=1}^{N} f(\lambda_i) \cdot P_i + \frac{\alpha^2}{2} \cdot \sum_{i=1}^{N} f^2(\lambda_i) \cdot P_i^2$$

aus drei Gleichungen, in dem die drei Unbekannten

$$\chi, \qquad \sum_{i=1}^{N} f(\lambda i) \cdot P_i \qquad \text{und} \qquad \sum_{i=1}^{N} f^2(\lambda_i) \cdot P_i^2$$

enthalten sind. Der Gewinn $G_{opt}$ im Ausgangszustand ist von der Auslegung und Dimensionierung des EDFA her bekannt. Damit läßt sich die gesuchte Größe $\chi$ eindeutig bestimmen:

$$\chi = \alpha \cdot \frac{P_{out} + P_{out}^{filt} - (P_{in} + P_{in}^{filt}) \cdot G_{opt}}{P_{out} - P_{out}^{filt} + (P_{in} - P_{in}^{filt}) \cdot G_{opt}}\,.$$

Um den Aufwand gering zu halten, wurde die Reihenentwicklung nach dem Glied zweiter Ordnung abgebrochen. Damit läßt sich die Exponentionalfunktion nur innerhalb eines begrenzten Wertebereichs approximieren. Soll dieser Wertebereich vergrößert werden, können Terme höherer Ordnung ebenfalls berücksichtigt werden, wobei weitere Photodioden mit unterschiedlichen vorgeschalteten Filtern eingesetzt werden müssen.

Mit der Taylorreihenentwicklung erhält man eine sehr gute Approximation der Exponentialfunktion bei sehr kleinen Argumenten, während bei größeren Werten größere Abweichungen auftreten. Deshalb bietet es sich an, den Faktor ½ vor dem zweiten Term so anzupassen, daß innerhalb des gewünschten Wertebereichs der maximal auftretende Fehler minimal wird. Ersetzt man den Faktor ½ z.B. durch 0.81, lassen sich Gewinnverkippungen bis 4.5dB bei einem maximalen Fehler von 0.18dB einstellen.

Entsprechend eines weiterführenden erfindungsgemäßen Aspektes, der zu einer besonders einfachen und eleganten Vorrichtung zur Bestimmung der Verkippung des Frequenzspektrums führt, sei noch spezielle Anwendung des oben beschriebenen Prinzips der folgende Gedanke dargestellt:

Betrachtet man bei einem gemessenen Spektrum $S(\lambda)$ im Wellenlängenbereich von $\lambda_{Start}$ bis $\lambda_{Stop}$ die Verkippung, so kann man diese durch eine numerische Analyse bestimmen und eine Kenngröße für die Verkippung, beispielsweise das erste Moment $M_1$ des Spektrums relativ zu der Mittenwellenlänge $\lambda_c$ des Spektrums ($\lambda_c = (\lambda_{Start} +$

$\lambda_{Stop}$)/2):

$$M_1 = \int\limits_{-L/2}^{+L/2} x\, S\big(x + \lambda_c\big)\, dx \qquad \texttt{mit} \qquad L = \big(\lambda_{Stop} - \lambda_{Start}\big)$$

charakterisieren. Auch andere ungerade Funktionen $f(x)$ (ungerade bedeutet hier $f(x)=-f(-x)$) können eingesetzt werden:

$$V = \int\limits_{-L/2}^{+L/2} f(x)\, S\big(x - \lambda_c\big)\, dx$$

Erfindungsgemäß wird statt einer aufwendigen spektral aufgelösten Messung des Spektrums $S(\lambda)$ und einer anschließenden spektralanalytischen numerischen Bestimmung der Verkippung das Spektrum mit einem optischen Filter mit dem Frequenzgang $G(\lambda)$ gewichtet und die Summenausgangsleistung $P_V$ des Filters mit einer einfachen Photodiode gemessen. Die Gewichtung kann dabei der zu erwartenden Verkippung angepaßt werden:

$$P_V = \int\limits_{0}^{+\infty} G(\lambda)\, S(\lambda)\, d\lambda$$

Da der Frequenzgang $G(\lambda)$ und das Spektrum $S(\lambda)$ größer 0 sind, ist auch bei einem unverkippten Spektrum auch $P_V$ größer 0. Dieser Offset ist beim Einsatz zu beachten. Weiterhin sollte der Frequenzgang $G(\lambda)$ von $\lambda_{Start}$ bis $\lambda_{Stop}$ zu $G(\lambda_c)$ ungerade sein (ungerade bedeutet hier $G(\lambda_c+x)-G(\lambda_c)=-[G(\lambda_c-x)-G(\lambda_c)]$). Außerdem sollte sich die monotone Flanke des Filter-Frequenzgangs von $\lambda_{Start}$ bis $\lambda_{Stop}$ erstrecken. Auch können Frequenzgänge von Photodioden oder Kopplern in $G(\lambda)$ berücksichtigt werden, falls sie sonst zu Verfälschungen des Meßergebnisses führen würden. Eine Bandpaß-Beschränkung auf einen zu betrachtenden Wellenlängenbereich (beispielsweise von $\lambda_{Start}$ bis $\lambda_{Stop}$) kann in $G(\lambda)$ ebenfalls enthalten sein.
Als Funktionsbeispiel sind in der Figur 4 mehrere linear verkippte Spektren $S(\lambda)=a\cdot\lambda+b$ , dargestellt als gestrichelte Linien, gezeigt. Die Gesamtleistung

$$\int\limits_{0}^{+\infty} S(\lambda)\, d\lambda$$

aller Spektren ist hier gleich, so daß man mittels einer Photodiode unabhängig von der Verkippung die gleiche Leistung messen würde. Fügt man nun einen Filter mit Frequenzgang $G(\lambda)$ ein, wird, wie in Figur 5 dargestellt, die an der Photodiode gemessene Leistung abhängig von der Verkippung und kann somit als Maß der Verkippung für Regelaufgaben herangezogen werden.
Beispielhaft kann ein Mach-Zehnder-Interferometer mit einem $\cos^2$-förmigen Frequenzgang als geeigneter Filter herangezogen werden. Hierbei besitzt der Meßwert ein von der Summenleistung des optischen Signals abhängigen Offset. Offset bedeutet hier, daß die Meßvorrichtung auch bei verschwindender Verkippung des Spektrums ein Signal liefert. Dieser Nachteil kann durch ein optisches Filter mit zwei gegenläufigen Frequenzgängen $G_{AB}(\lambda)$ und $G_{AC}(\lambda)$ vermieden werden, wenn $G_{AB}(\lambda)+G_{AC}(\lambda)=konst.$ gilt. Ein Realisierungsbeispiel mit zwei gegenläufigen Frequenzgängen ist die Verwendung der zwei Ausgänge eines Mach-Zehnder-Interferometers. Mit diesem Aufbau kann gleichzeitig die Verkippung und die Gesamtleistung des Signals bestimmt werden:
Die Verkippung V ergibt sich aus der Differenz der Meßwerte mit:

$$V = P_{VC} - P_{VA} = \int\limits_{0}^{+\infty} [G_{AC}(\lambda) - G_{AB}(\lambda)] S(\lambda)\, d\lambda$$

Für einen linearen Frequenzgang verschwindet bei $G_{AB}(\lambda_C)=G_{AC}(\lambda_C)$ der Offset von V.

Die Summenleistung P errechnet sich aus der Summe der Messwerte:

$$P = P_{VC} + P_{VA} = \int\limits_{0}^{+\infty} [G_{AC}(\lambda) + G_{AB}(\lambda)] S(\lambda)\, d\lambda = konst. \int\limits_{0}^{+\infty} S(\lambda)\, d\lambda$$

Vorteilhaft wird diese Größe bereits zur Regelung der Pumplaserdioden in Faserverstärkern verwendet und kann nun auch zur Normierung der Verkippung eingesetzt werden, falls die Größe der Verkippung und nicht nur das Vorzeichen benötigt wird.

Besonders vorteilhaft bei dieser dargestellten Lösung erweist sich, der sehr einfache und damit kostengünstige Aufbau dieser Messung, wobei keine spektral aufgelöste Messung notwendig ist. Es wird eine dezentrale Regelung ermöglicht, wodurch sich der Softwareaufwand für die Steuerung reduziert und sich die Regelgeschwindigkeit erhöht. Weiterhin kann die Gewichtung an eine grundsätzlich bekannte Verkippungfunktion des Faserverstärkers und an mögliche Störungen des Spektrums, wie beispielsweise eine Verkippung durch SRS-Dämpfung, angepaßt werden.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Insgesamt zeigt diese Erfindung also ein einfaches Verfahren zur Bestimmung der Verkippung des Spektrums eines optischen Signals durch Messung von mindestens einer Gesamtintensität im Anschluß an einen Durchgang des Signals durch Beeinflussungselement mit bekannter Beeinflussungscharakteristik, einschließlich deren Verwendungsmöglichkeit für die Einstellung der spektralen Verkippung.

**Patentansprüche**

1. Verfahren zur Bestimmung und Einstellung der Verkippung des Spektrums von Lichtsignalen in einer Lichtleitfaser einer optischen Datenübertragungsstrecke mit mindestens einem Mittel zur Veränderung der Verkippung des Spektrums,

   - bei dem die Lichtsignale durch mindestens einen optischen Verstärker (7) verstärkt werden und ein Teil der verstärkten Lichtsignale ausgekoppelt wird,
   - bei dem die ausgekoppelten Lichtsignale teilweise durch ein Beeinflussungselement (11) mit bekannter frequenzabhängiger Intensitätsbeeinflussung geleitet werden,
   - bei dem die Gesamtintensität der ausgekoppelten Lichtsignale vor und nach dem Beeinflußungselement (11) gemessen wird,

   **dadurch gekennzeichnet,**
   **daß** als Beeinflussungselement (11) ein optischer Verstärker oder eine optisch verstärkend wirkende Wellenleiterstruktur oder Faser verwendet wird,
   **daß** die Gesamtintensität der Lichtsignale vor der Verstärkung gemessen wird und
   **daß** aufgrund des bekannten Einflusses des Beeinflussungselementes (11) und der gemessenen Gesamtintensitäten ein Regelkriterium zur Einstellung der Verkippung bestimmt wird, über das das Mittel zur Veränderung der Verkippung geregelt wird.

2. Verfahren nach Anspruch 1,
   **dadurch gekennzeichnet,**
   **daß** mindestens ein optischer Verstärker (7) ein Erbium-dotierter Faserverstärker ist.

3. Verfahren nach Anspruch 1,
   **dadurch gekennzeichnet,**

**daß** als Mittel zur Veränderung der Verkippung mindestens ein optischer Verstärker (7) verwendet wird.

4. Verfahren nach Anspruch 1,
   **dadurch gekennzeichnet,**
   **daß** als Mittel zur Veränderung der Verkippung ein einstellbares frequenzabhängiges optisches Filter verwendet wird.

5. Verfahren nach Anspruch 4,
   **dadurch gekennzeichnet,**
   **daß** als einstellbares frequenzabhängiges optisches Filter ein Mach-Zehnder-Interferometer mit verstellbarer Leistungsaufteilung in seine zwei Zweige oder mit einstellbarer Zeitverzögerung im mindestens einem seiner zwei Zweige verwendet wird.

6. Verfahren nach einem der Ansprüche 3 bis 5,
   **dadurch gekennzeichnet,**
   **daß** eine vorhandene Verkippung ganz oder teilweise kompensiert wird oder auf eine gegenläufige Verkippung eingestellt wird.

7. Verfahren nach einem der Ansprüche 3 bis 6,
   **dadurch gekennzeichnet,**
   **daß** eine Verkippung mit einer vordefinierten Größe erzeugt wird.

**Claims**

1. Method for determining and setting the tilting of the spectrum of light signals in an optical fibre of an optical data transmission path having at least one means for varying the tilting of the spectrum,

   - in which the light signals are amplified by at least one optical amplifier (7) and a portion of the amplified light signals is extracted,
   - in which the extracted light signals are partially guided through an influencing element (11) with a known frequency-dependent intensity influence,
   - in which the total intensity of the extracted light signals is measured upstream and downstream of the influencing element (11),

   **characterized in that** use is made as influencing element (11) of an optical amplifier or a waveguide structure or fibre with an optical amplifying action, **in that** the total intensity of the light signals is measured before the amplification, and **in that** there is determined on the basis of the known influence of the influencing element (11) and the measured total intensities a control criterion for setting the tilting via which the means for varying the tilting is controlled.

2. Method according to Claim 1, **characterized in that** at least one optical amplifier (7) is an erbium-doped fibre amplifier.

3. Method according to Claim 1, **characterized in that** use is made of at least one optical amplifier (7) as means for varying the tilting.

4. Method according to Claim 1, **characterized in that** use is made of a settable frequency-dependent optical filter as means for varying the tilting.

5. Method according to Claim 5, **characterized in that** the settable frequency-dependent optical filter used is a Mach-Zehnder interferometer with adjustable power division into its two branches or with settable time delay in at least one of its two branches.

6. Method according to one of Claims 3 to 5, **characterized in that** an existing tilting is compensated for completely or partially or is set to a tilting in the opposite direction.

7. Method according to one of Claims 3 to 6, **characterized in that** a tilting of a predefined magnitude is produced.

**Revendications**

1. Procédé pour la détermination et réglage du basculement du spectre de signaux lumineux dans une fibre optique d'une ligne de transmission optique de données avec au moins un moyen pour la modification du basculement du spectre,

   - dans lequel les signaux lumineux sont amplifiés par au moins un amplificateur (7) optique et une partie des signaux lumineux amplifiés est dissociée,
   - dans lequel les signaux lumineux dissociés sont guidés partiellement à travers un élément d'influence (11) avec une influence d'intensité dépendante de la fréquence et connue,
   - dans lequel l'intensité globale des signaux lumineux dissociés est mesurée avant et après l'élément d'influence (11),

   **caractérisé en ce**
   **qu'**on utilise comme élément d'influence (11) un amplificateur optique ou une structure de guide d'ondes à effet amplifiant au plan optique ou une fibre, en ce que l'intensité globale des signaux lumineux est mesurée avant l'amplification et en ce que, compte tenu de l'influence connue de l'élément d'influence (11) et des intensités globales mesurées, on détermine un critère de réglage pour le réglage du basculement, par lequel le moyen pour la modification du basculement est réglé.

2. Procédé selon la revendication 1,
   **caractérisé en ce**
   **qu'**au moins un amplificateur (7) optique est un amplificateur à fibre dopée à l'erbium.

3. Procédé selon la revendication 1,
   **caractérisé en ce**
   **qu'**on utilise comme moyen pour la modification du basculement au moins un amplificateur (7) optique.

4. Procédé selon la revendication 1,
   **caractérisé en ce**
   **qu'**on utilise comme moyen pour la modification du basculement un filtre optique dépendant de la fréquence et réglable.

5. Procédé selon la revendication 4,
   **caractérisé en ce**
   **qu'**on utilise comme filtre optique, dépendant de la fréquence et réglable un interféromètre de Mach-Zehnder avec une répartition de puissance réglable entre ses deux branches ou avec une temporisation réglable dans au moins l'une de ses deux branches.

6. Procédé selon l'une quelconque des revendications 3 à 5,
   **caractérisé en ce**
   **qu'**un basculement existant est compensé entièrement ou partiellement ou est réglé sur un basculement contraire.

7. Procédé selon l'une quelconque des revendications 3 à 6,
   **caractérisé en ce**
   **qu'**un basculement est généré avec une grandeur prédéfinie.

Fig. 1a

Fig. 1b

Fig. 2a

Fig. 2b

Fig. 3

## Fig. 4

Filtercharakteristik

$G(\lambda)$

$S_2(\lambda)$

$S_2(\lambda)$

$S_1(\lambda)$

$S_{0,5}(\lambda)$

$S_0(\lambda)$

Leistung [a.u.]

verkippte Spektren

Wellenlänge [a.u.]

## Fig. 5

gemessene Leistung

$S_2$

$S_{0,5}$

$S_1$

$S_{-0,5}$

$S_0$

$S_{-2}$

$S_{-1}$

Offset

Leistung [a.u.]

Steigung der spektralen Verkippung [a.u.]

13